(19) Europäisches Patentamt
European Patent Office
Office européen des brevets

(11) **EP 2 578 802 A1**

(12) **EUROPEAN PATENT APPLICATION**
published in accordance with Art. 153(4) EPC

(43) Date of publication:
**10.04.2013 Bulletin 2013/15**

(21) Application number: **11786634.3**

(22) Date of filing: **24.05.2011**

(51) Int Cl.:
*F01D 5/16* (2006.01)    *F01D 25/00* (2006.01)
*F01D 25/06* (2006.01)    *F02C 7/00* (2006.01)
*F04D 29/38* (2006.01)    *F16F 15/02* (2006.01)

(86) International application number:
**PCT/JP2011/061858**

(87) International publication number:
**WO 2011/148935 (01.12.2011 Gazette 2011/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2010 JP 2010118949
24.05.2010 JP 2010118350**

(71) Applicant: **IHI Corporation
Tokyo 135-8710 (JP)**

(72) Inventors:
• **BAYOD RELANCIO Jose Javier
Tokyo 135-8710 (JP)**

• **MOTOI Hisayuki
Tokyo 135-8710 (JP)**
• **HATTORI Hiroaki
Tokyo 135-8710 (JP)**

(74) Representative: **Lamb, Martin John Carstairs
Marks & Clerk LLP
90 Long Acre
London
WC2E 9RA (GB)**

(54) **VIBRATION DAMPING BLADE FOR FLUID**

(57) The vibration damping blade for fluid of the present invention has an integrally formed wedge damper, in which a thickness h(x) at a distance x from an imaginary line outside of an outer edge is $h(x) = \varepsilon x^n$ (where $\varepsilon$ is a positive constant, and n is a real number of 1 or more). As a result, it is possible to offer a vibration damping blade for fluid which can be easily manufactured, and which obtains damping effects across a wide range of frequency regions without disturbing the flow of fluid.

FIG. 2A

**Description**

Technical Field

The present invention relates to a vibration damping blade for fluid which damps the vibration of a blade used in fluid.
Priority is claimed on Japanese Patent Application No. 2010-118350, filed May 24, 2010, and Japanese Patent Application No. 2010-118949, filed May 25, 2010, the contents of which are incorporated herein by reference.

Background Art

In the present invention, "blade for fluid" signifies moving blades and stator blades used in jet engines, turbo-machinery (gas turbines and turbo-chargers) and other rotary machinery, as well as fixed blades and rotor blades (propellers) used in other machinery (wind tunnels, maritime vessels, and so on).
In addition, this blade includes blade parts which are attached to rotors configuring blade carriages in turbines and compressors.
As a means for damping the vibration of mechanical devices that vibrate, damper devices are widely known. Damper devices can be roughly classified according to viscoelastic dampers, viscous dampers, friction dampers, mass dampers, inertial dampers, and so on.
Among these, mass dampers are devices which inversely utilize the vibration of bodies with mass to eliminate the vibration of mechanical devices, and have the advantage of being simple in structure compared to other damper devices.
As one type of mass damper, an elastic wedge damper which utilizes the acoustic black hole effect is disclosed in, for example, Non-Patent Document 1.
An elastic wedge signifies a wedge-shaped elastic body. With respect to flexural vibration, vibrational wave speed slows when the thickness of the elastic wedge gradually diminishes, and vibrational wave speed becomes zero when thickness becomes zero (0), therefore the vibrational wave is not reflected. That is, an elastic wedge functions as an "acoustic black hole," with the result that vibrational energy collects at the end portion where thickness becomes zero, thereby facilitating energy damping.
However, in actuality, it is difficult to manufacture an elastic wedge having an end portion of zero thickness, and reflection does not become zero (0). In Non-Patent Document 1, damping material is affixed to the end portion of an elastic wedge in order to damp reflection,
[0006]    The aforementioned elastic wedge damper has the advantage that it is simple in structure like a mass damper, and that its thickness is less than that of a mass damper, enabling weight reduction.
A vibration or acoustic damping means using a wedge-shaped elastic body is, for example, also disclosed in Patent Documents 1 and 2.
In addition, a coating means related to the present invention is, for example, disclosed in Patent Documents 3 and 4.

Citation List

Patent Document

Patent Document 1: Japanese Unexamined Patent Application, First Publication No. 2000-43252
Patent Document 2: Published Japanese Translation No. 2008-532917 of the PCT International Application
Patent Document 3: PCT International Publication No. WO2004/029329
Patent Document 4: PCT International Publication No. W02004/033755

Non-Patent Document

Non-Patent Document 1: V. V. Krylov & R.E.T.B. Winward, "Experimental investigation of the acoustic black hole effect for flexural waves in tapered plates," Journal of Sound and Vibration 300(2007) 43-49.

Summary of Invention

Technical Problem

FIG. 1 is a schematic view of the elastic wedge damper used in Non-Patent Document 1. This elastic wedge damper is a non-symmetric quadratic wedge-like damper. In this drawing, reference numeral 51 is an elastic wedge, 52 is a vibration absorbing film, and 53 is a thick plate integrated with the elastic wedge 51.
The dimensions of the elastic wedge 51 experimentally used in Non-Patent Document 1 are 280 mm in length, 200 mm in width, and 4.5 mm in the thickness of the thick plate 53, with a minimum thickness of 0.02 mm. Thickness h(x) relative to a distance x from the foremost end has the reflation of $h(x) = \varepsilon x^2$ ... (A1). Here, $\varepsilon$ is a positive constant.
Moreover, the vibration absorbing film 52 is a polymer film with the same dimensions as those of the elastic wedge 51 (280 mm in length and 200 mm in width), and with a thickness of 0.2 mm.
From these experimental results, with respect to a wide band of 500 Hz to 18000 Hz, a damping effect on the vibration peak is recognized, and obtainment of major damping (reduction in vibrational energy) is noted at intermediate frequencies and high frequencies in particular.
As stated above, based on theoretical formula (A1), the thickness of the elastic wedge damper (test plate) used in Non-Patent Document 1 is from 4.5 mm to 0.02 mm. However, it is extremely difficult to conduct machining to a thickness near 0 mm (in this example, 0.02 mm) based on theoretical formula (A1), and special machining equipment or a special method is indispensable in order to achieve this. Consequently, manufacture of the elastic wedge disclosed in Non-Patent Document 1 is substantively impossible, and would be extremely expensive even if possible.
On the other hand, as blades for fluid for jet engines and the like vibrate at high frequency, breakage of portions of the blade due to vibration is possible. Thus, research concerning damping of blade vibration is being widely conducted around the world.
However, blades for fluid cannot use damping means that disturb the flow of the fluid. Moreover, with respect to blades for fluid which are used in high-temperature environments (e.g., at 1000°C or higher), damping means that disturb the flow of fluid as well as damping material with low heat resistance (e.g., polymer or rubber) cannot be used. Consequently, with respect to this type of blade, an optimal damping means has not been found heretofore.
As the common damping means are only effective at target frequencies, it is difficult to apply them to blades that have the possibility of vibrating at a wide range of speeds and a wide range of frequencies.
The present invention was conceived in order to solve the aforementioned problems. Specifically, the object of the present invention is to offer a vibration damping blade for fluid which can be easily manufactured, and which obtains damping effects in a wide range of frequency regions without disturbing the flow of fluid even, for example, in high-temperature environments.

Solution to Problem

The present invention offers a vibration damping blade for fluid which has an integrally formed wedge damper, in which a thickness h(x) at a distance x from an imaginary line outside of an outer edge of the wedge damper is $h(x) = \varepsilon x^n$ (where $\varepsilon$ is a positive constant, and n is a real number of 1 or more).
In this case, the outer edge of the wedge damper is, for example, a front edge, rear edge, or terminal edge of the vibration damping blade for fluid.
The vibration damping blade for fluid may have a damping member which covers the wedge damper, and which has an outer surface that continues without irregularities to an outer surface of a blade body. In this case, the damping member may form a predetermined blade shape together with the blade body.
Or the vibration damping blade for fluid may have a coating which covers the wedge damper, and which has heat resistance relative to a working fluid of the blade.
In this case, the coating may be composed of a bolus ceramic or metal, cover the wedge damper, have an outer surface that continues without irregularities to an outer surface of a blade body, and form a predetermined blade shape together with the blade body.
The coating may be a ceramic or metal film formed on a surface of a blade body by generating a pulse-like electric discharge between the surface of the blade body and an electrode composed of a ceramic or metal powder and using the discharge energy.

Advantageous Effects of Invention

According to the above-described configuration of the present invention, as the vibration damping blade for fluid has an integrally formed wedge damper, and as a thickness h(x) at a distance x at its outer edge is $h(x) = \varepsilon x^n$ (where $\varepsilon$ is a positive constant, and n is a real number of 1 or more), thickness h(x) at the outer edge (x > 0) can be set to a thickness with satisfactory machineability. Accordingly, the wedge damper can be easily manufactured without use of special equipment or methods.

With respect to the wedge damper, as thickness h(x) at a distance x from the free end is $h(x) = \varepsilon x^n$ (where $\varepsilon$ is a positive constant, and n is a real number of 1 or more), reflection of vibrational waves can be mitigated at this portion by an acoustic black hole effect.

Furthermore, vibrational energy collects at the thin-walled part of the wedge damper, but by covering the wedge damper with a damping member, vibration at the thin-walled part of the wedge damper can be effectively damped by the damping member.

Similarly, by covering the wedge damper with a coating that has heat resistance relative to a working fluid, vibration at the thin-walled portion of the wedge damper can be effectively damped by the coating even in high-temperature environments,

As the damping member or coating has an outer surface that continues without irregularities to the outer surface of the blade body, damping effects can be obtained without disturbing the flow of fluid.

As a result, according to the vibration damping blade for fluid of the present invention, it has been experimentally confirmed that effective damping is obtained over a wide range of frequency regions from 10 kHz to 30 kHz, which is the target frequency range.

Brief Description of Drawings

FIG. 1 is a schematic view of the elastic wedge damper used in Non-Patent Document 1.
FIG. 2A is an overall schematic view of a vibration damping blade for fluid of the present invention.
FIG. 2B shows a thickness of the vibration damping blade for fluid of the present invention.
FIG. 3 is a schematic view which shows a formation means for a coating of the present invention.
FIG. 4A shows a thickness of a wedge damper of the present invention.
FIG. 4B shows vibration transmission speed in the wedge damper of the present invention.
FIG. 4C shows vibration amplitude in the wedge damper of the present invention.
FIG. 5A is a perspective view which shows a working example of the vibration damping blade for fluid of the present invention.
FIG. 5B is a partial enlargement of FIG. 5A.
FIG. 6A shows experimental results of damping properties for the vibration damping blade for fluid of the present invention.
FIG. 6B shows experimental results of damping properties for the vibration damping blade for fluid of the present invention.

Description of Embodiments

A preferred embodiment of the present invention is described below in detail based on appended drawings. In the various drawings, the same reference numerals are assigned to common components, and duplicative description thereof is omitted.

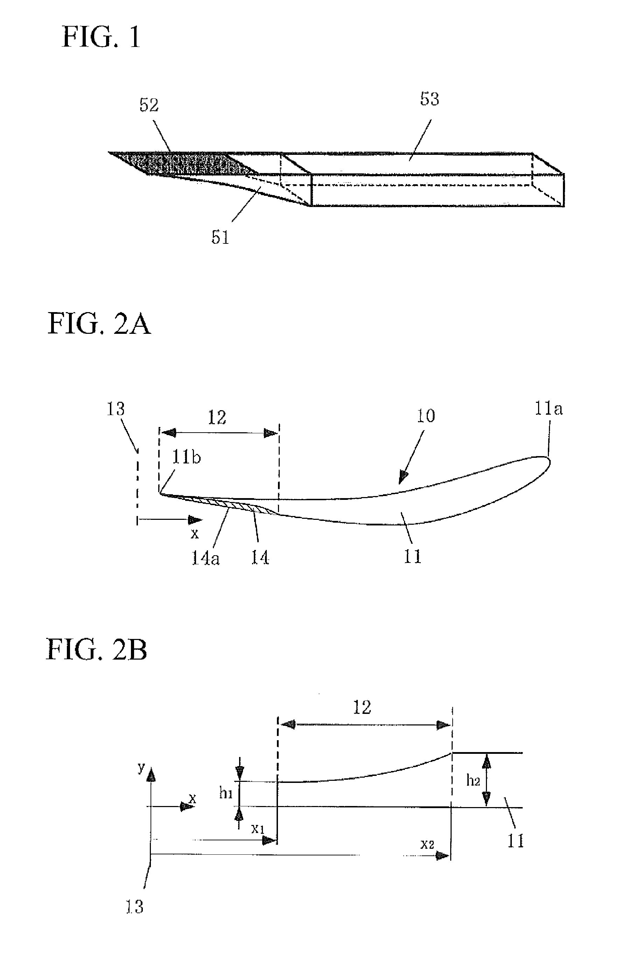

FIG. 2A is an overall schematic view of a vibration damping blade for fluid of the present invention.
In FIG. 2A, a vibration damping blade 10 for fluid of the present invention has a wedge damper 12 integrally formed with a blade body 11.

In this example, the blade body 11 occupies the front edge side including a front edge 11 a, and the wedge damper 12 is formed at a rear edge 11 b side. However, the wedge damper 12 may be disposed either at the front edge side or terminal edge side of the blade 10.
The blade body 11 and the wedge damper 12 are preferably composed of the same vibrateable elastic material (e.g., metal), and integrally formed. It is also acceptable to separately fabricate the blade body 11 and the wedge damper 12, and to integrate them by means of welding or the like.

As shown in FIG. 2B, a thickness h(x) of the wedge damper 12 at a distance x from an imaginary line 13 outside of its outer edge (in this example, the rear edge 11b) is formed to $h(x) = \varepsilon x^n$ (where $\varepsilon$ is a positive constant, and n is a real number of 1 or more)... (A2).
Here, the distance x is a positive number, and a thickness h(xl) of the outer edge of the wedge damper 12 (in this example, the rear edge 11b) is set to enable easy manufacture of the wedge damper 12 without use of special equipment or methods.

In FIG. 2A, the vibration damping blade 10 for fluid of the present invention also has a damping member 14 which covers the wedge damper 12. The damping member 14 has the function of attenuating the vibration that occurs at the thin-walled portion of the wedge damper 12.

The damping member 14 is formed with material (e.g., polymer, elastic rubber or the like) which has damping performance in the desired frequency range (e.g., from 10 kHz to 30 kHz). It is also desirable that the damping member 14 be composed of material which has a Young's modulus (E) that is as large as possible compared to that of the wedge damper 12. In addition, it is desirable that the damping member 14 be composed of material which has a damping ratio (v) that is as large as possible.

In this example, the scope of coverage of the wedge damper 12 by the damping member 14 is the entire surface, but it is also acceptable to cover only the thin-walled portion (the vicinity of the outer edge) of the wedge damper 12. The damping member 14 is not indispensable to the present invention, and may be omitted in the case where the thin-walled portion of the wedge damper 12 can be manufactured with sufficient thinness.

The damping member 14 has an outer surface 14a that conforms to the flow of the fluid that flows around the vibration damping blade 10 for fluid. This outer surface 14a continues to the outer surface of the blade body 11 of the vibration damping blade 10 for fluid, and is provided so that there are no irregularities between the two. Furthermore, in this example, the damping member 14 is formed with a predetermined blade shape together with the blade body 11. The thickness of the damping member 14 is optional. For example, in this embodiment, the thickness of the damping member 14 is varied according to the distance x so that the outer surface shape of the vibration damping blade 10 for fluid is identical to that of a conventional blade, but it is also acceptable to render this thickness uniform.

The damping member 14 may be a coating which has heat resistance relative to the working fluid of the vibration damping blade 10 for fluid. The coating 14 is damping material (e.g., bolus ceramic or metal) which has heat resistance relative to the working fluid in the desired frequency range (e,g., from 10 kHz, to 30 kHz).

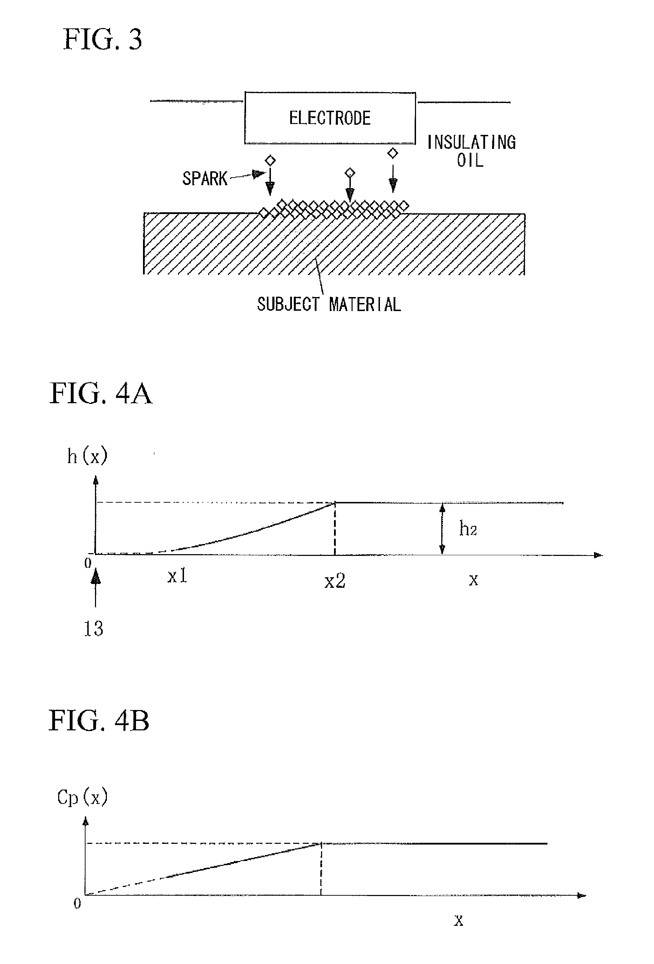

FIG. 3 is a schematic view which shows a means of formation of the coating 14 of the present invention. This drawing shows the coating method disclosed in Patent Documents 3 and 4. With this method, a pulse-like discharge is generated between the surface of the subject material and an electrode composed of ceramic or heat resistant metal powder, and a film of ceramic or heat resistant metal is formed on the surface of the subject material by the energy of the discharge.

Below, a film formed by this method is called a microspark coating (trademark registered as "MS coating"), and abbreviated as "MSC." An MS coating forms a film of ceramic or heat resistant metal on the surface of the subject material by tiny electric discharges. Consequently, even with respect to ceramic or heat resistant metal, it is possible to have voids in the interior, and to provide heat resistant properties and damping performance.

Furthermore, as shown in Table 1, MS coating exhibits excellent properties with respect to cost, necessity of pretreatment/aftertreatment, quality, deformation, coating material, and the environment as compared to plating, plasma spraying, and welding.

Table 1

|  | MSC | Plating | Plasma spraying | Welding |
|---|---|---|---|---|
| Cost | Low | High | High | Intermediate |
| Pretreatment/ aftertreatment | Unnecessary | Masking required | Masking required | Finishing treatment required |
| Quality | Stable | Possibility of peeling | Possibility of peeling | Possibility of cracking |
| Deformation | None | None | Some | Much |
| Film material | Ceramic, metal | Metal | Ceramic, metal | Metal |

The scope of coverage of the wedge damper 12 by the coating 14 is the entire surface in the example shown in FIG. 2A, but it is also acceptable to have the coating 14 cover only the thin-walled portion (the vicinity of the outer edge) of the wedge damper 12.

The coating 14 has the outer surface 14a which conforms to the flow of the fluid that flows around the vibration damping blade 10 for fluid. This outer surface 14a continues to the outer surface of the blade body 11 of the vibration damping blade 10 for fluid, and is provided so that there are no irregularities between the two. Furthermore, in this example, the coating 14 forms a predetermined blade shape together with the blade body 11. The thickness of the coating 14 is optional. For example, in this embodiment, the thickness of the coating 14 is varied according to the distance x so that the outer surface shape of the vibration damping blade 10 for fluid is identical to that of a conventional blade, but it is also acceptable to render this thickness uniform.

FIG. 4A to FIG. 4C are drawings which show the thickness of the wedge damper 12 of the present invention, vibration transmission speed in the wedge damper 12, and amplitude of vibration in the wedge damper 12.

In FIG. 4A, the wedge damper 12 has one end that is integrally connected with identical thickness to the blade body 11, and thickness $h(x)$ at a distance $x$ from the imaginary line 13 on the outside is $h(x) = \varepsilon x^2$ (where $\varepsilon$ is a positive constant).
The present invention is not limited to this relationship, and it is also acceptable to have a relationship of $h(x) = \varepsilon x^n$ (where $\varepsilon$ is a positive constant, and $n$ is a real number of 1 or more).

Amplitude $A(x)$ and transmission speed $Cp(x)$ in the wedge damper 12 is expressed by the following formulas (1)-(4). Here, $n$ is a real number of 1 or more, AO is input amplitude (amplitude of the vibration transmitted from the vibration transmission site), $\omega$ is frequency, $k$ is wave number, $p$ is density, and $E$ is Young's modulus.

$$h(x) = \varepsilon x^n \qquad \cdots (1)$$

$$\frac{A(x)}{Ao} = \left(\frac{h(x)}{ho}\right)^{-3/4} \qquad \cdots (2)$$

$$k = \left(\frac{3 \rho \omega^2}{E h^2(x)}\right)^{1/4} \qquad \cdots (3)$$

$$Cp(x) = \frac{\omega}{k} \qquad \cdots (4)$$

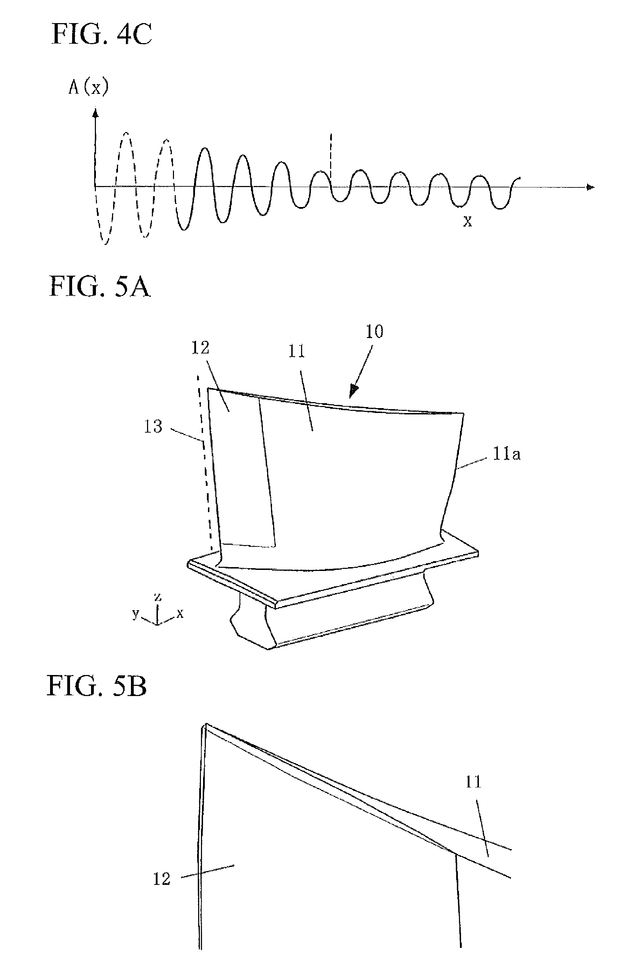

According to formulas (1)-(4), vibration transmission speed $Cp(x)$ and amplitude $A(x)$ in the wedge damper 12 are as in FIG. 4B and FIG. 4C.

As shown in FIG. 4C, vibration energy collects at the thin-walled portion (the vicinity of the rear end 11b) of the wedge damper 12. Accordingly, vibration of the thin-walled portion of the wedge damper 12 can be effectively damped by covering the thin-walled portion with the damping member 14.

<Working Example>

FIG. 5A and FIG. 5B are perspective views which show a working example of the vibration damping blade for fluid of the present invention.
In these drawings, the vibration damping blade 10 for fluid is a turbine moving blade for use in a jet engine. However, the present invention is not limited thereto, and may also be applied to moving blades or stator blades used in rotary equipment, or to fixed blades or rotor blades used in other equipment.

FIG. 5A is a perspective view of the vibration damping blade 10 for fluid (a turbine moving blade for a jet engine), and FIG. 5B is a partial enlargement thereof.

In this example, the front edge 11a of the blade body 11 is at the front edge side, and the wedge damper 12 is configured at the rear end 11b side,
Moreover, the blade body 11 and the wedge damper 12 are integrally formed from the same vibrateable elastic material (e.g., metal).

A conventional blade of the same shape was compared with the vibration damping blade 10 for fluid of the present invention shown in FIG. 5A and FIG. 5B, and vibration damping properties were compared by conducting a vibration analysis under the same conditions using a computer. It should be noted that $n$ in the subject wedge damper 12 was 2.
The damping member 14 was bonded to the wedge damper 12 over its entire surface, and the shape of its outer surface 14a is identical to that of the conventional blade. As the damping member 14, a commercially marketed product with the brand name of Hamadamper C-1 was used.

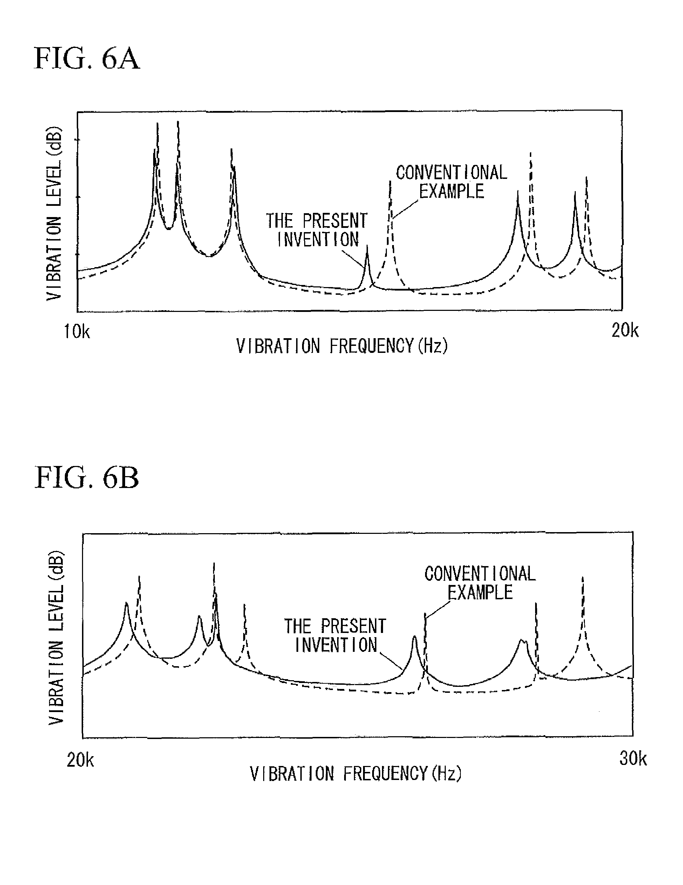

FIG. 6A and FIG. 6B show experimental results of damping properties with the vibration damping blade for fluid of the present invention.

In these drawings, FIG. 6A shows experimental results for frequencies from 10 kHz to 20 kHz, and FIG. 6B shows experimental results from 20 kHz to 30 kHz. In each of these drawings, the horizontal axis is vibration frequency (Hz), the vertical axis is vibration level (dB), the broken line in the drawings is the conventional example, and the solid line is the example of the present invention.

According to these drawings, in the entire frequency region from 10 kHz to 30 kHz, the vibration level of the vibration damping blade 10 for fluid of the present invention is lower than that of the conventional example, and it is experimentally confirmed that effective damping is obtained across a wide range of frequency regions.

According to the configuration of the present invention described above, as there is an integrally formed wedge damper 12, and as thickness at its outer edge is $h(x) = \varepsilon x^n$ (where $\varepsilon$ is a positive constant, and n is a real number of 1 or more), the thickness $h(x)$ at its outer edge $(x > 0)$ can be set to a thickness with good workability. Accordingly, the wedge damper 12 can be easily manufactured without using special equipment or methods.

Moreover, as the thickness $h(x)$ at a distance x from the free end of the wedge damper 12 is $h(x) = \varepsilon x^n$ (where $\varepsilon$ is a positive constant, and n is a real number of 1 or more), the reflection of vibrational waves in this portion can be mitigated by an acoustic black hole effect.

Furthermore, although vibrational energy collects at the thin-walled portion of the wedge damper 12, the thin-walled portion of the wedge damper 12 can be effectively damped by the damping member 14 by covering the wedge damper 12 with the damping member 14. In particular, by covering the wedge damper 12 with the coating 14 that has heat resistance properties relative to the working fluid, the thin-walled portion of the wedge damper 12 is effectively damped in high-temperature environments.

Moreover, as the damping member 14 has the outer surface 14a which continues without irregularities to the outer surface of the blade body, a damping effect is obtained without disturbing the flow of the fluid. In particular, in the case where the coating 14 with heat resistance properties relative to the working fluid has the outer surface 14a that continues without irregularities to the outer surface of the blade body, damping effects are obtained without disturbing the flow of a high-temperature fluid.

The present invention is not limited to the foregoing embodiment, and includes all modifications which are expressed by the content of the claims, and also which are equivalent in meaning to the content of the claims as well as within the scope thereof.

Industrial Applicability

According to the present invention, it is possible to offer a vibration damping blade for fluid which is easy to manufacture, and which obtains damping effects across a wide range of frequency regions without disturbing the flow of fluid.

Reference Signs List

10:     VIBRATION DAMPING BLADE FOR FLUID
11:     BLADE BODY
11a:    FRONT EDGE
11b:    REAR EDGE
12:     WEDGE DAMPER
13:     IMAGINARY LINE
14:     DAMPING MEMBER (COATING)
14a:    OUTER SURFACE

**Claims**

1. A vibration damping blade for fluid, comprising an integrally-formed wedge damper, wherein a thickness $h(x)$ at a distance x from an imaginary line outside of an outer edge of the wedge damper is $h(x) = \varepsilon x^n$ (where $\varepsilon$ is a positive constant, and n is a real number of 1 or more).

2. The vibration damping blade for fluid according to claim 1, wherein the outer edge of the wedge damper is a front edge, rear edge, or terminal edge.

3. The vibration damping blade for fluid according to claim 1, further comprising a damping member which covers the wedge damper, and which has an outer surface that continues without irregularities to an outer surface of a blade body, wherein the damping member forms a predetermined blade shape together with the blade body.

4. The vibration damping blade for fluid according to claim 1, further comprising a coating which covers the wedge damper, and which has heat resistance relative to a working fluid.

5. The clothes damping blade for fluid according to claim 4, wherein the coating is composed of a bolus ceramic or metal, covers the wedge damper, has an outer surface that continues without irregularities to an outer surface of a blade body, and forms a predetermined blade shape together with the blade body.

6. The vibration damping blade for fluid according to claim 4, wherein the coating is a ceramic or metal film formed on a surface of a blade body by generating a pulse-like electric discharge between the surface of the blade body and an electrode composed of a ceramic or metal powder and using the discharge energy.

7. The clothes damping blade for fluid according to claim 4, wherein the outer edge of the wedge damper is a front edge, rear edge, or terminal edge.

**Amended claims under Art. 19.1 PCT**

1. original). A vibration damping blade for fluid, comprising an integrally-formed wedge damper, wherein a thickness $h(x)$ at a distance x from an imaginary line outside of an outer edge of the wedge damper is $h(x) = \varepsilon x^n$ (where $\varepsilon$ is a positive constant, and n is a real number of 1 or more).

2. original). The vibration damping blade for fluid according to claim 1, wherein the outer edge of the wedge damper is a front edge, rear edge, or terminal edge.

3. original). The vibration damping blade for fluid according to claim 1, further comprising a damping member which covers the wedge damper, and which has an outer surface that continues without irregularities to an outer surface of a blade body, wherein the damping member forms a predetermined blade shape together with the blade body.

4. original). The vibration damping blade for fluid according to claim 1, further comprising a coating which covers the wedge damper, and which has heat resistance relative to a working fluid.

5. mended). The vibration damping blade for fluid according to claim 4, wherein the coating is composed of a bolus ceramic or metal, covers the wedge damper, has an outer surface that continues without irregularities to an outer surface of a blade body, and forms a predetermined blade shape together with the blade body.

6. original). The vibration damping blade for fluid according to claim 4, wherein the coating is a ceramic or metal film formed on a surface of a blade body by generating a pulse-like electric discharge between the surface of the blade body and an electrode composed of a ceramic or metal powder and using the discharge energy.

7. amended). The vibration damping blade for fluid according to claim 4, wherein the outer edge of the wedge damper is a front edge, rear edge, or terminal edge.

## FIG. 1

## FIG. 2A

## FIG. 2B

FIG. 3

FIG. 4A

FIG. 4B

FIG. 4C

FIG. 5A

FIG. 5B

## FIG. 6A

THE PRESENT INVENTION

CONVENTIONAL EXAMPLE

VIBRATION LEVEL (dB)

10k    20k

VIBRATION FREQUENCY (Hz)

## FIG. 6B

THE PRESENT INVENTION

CONVENTIONAL EXAMPLE

VIBRATION LEVEL (dB)

20k    30k

VIBRATION FREQUENCY (Hz)

## INTERNATIONAL SEARCH REPORT

| | International application No. |
|---|---|
| | PCT/JP2011/061858 |

**A. CLASSIFICATION OF SUBJECT MATTER**
*F01D5/16*(2006.01)i, *F01D25/00*(2006.01)i, *F01D25/06*(2006.01)i, *F02C7/00*
(2006.01)i, *F04D29/38*(2006.01)i, *F16F15/02*(2006.01)i

According to International Patent Classification (IPC) or to both national classification and IPC

**B. FIELDS SEARCHED**

Minimum documentation searched (classification system followed by classification symbols)
F01D5/12-5/16, 25/00, 25/06, F02C7/00, F04D29/18-29/38, F16F15/02,
B64C3/14, 13/16, 27/467, 27/51

Documentation searched other than minimum documentation to the extent that such documents are included in the fields searched
Jitsuyo Shinan Koho          1922-1996     Jitsuyo Shinan Toroku Koho     1996-2011
Kokai Jitsuyo Shinan Koho    1971-2011     Toroku Jitsuyo Shinan Koho     1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2-23300 A  (Mitsubishi Electric Corp.),<br>25 January 1990 (25.01.1990),<br>page 2, lower right column, line 5 to page 3,<br>lower right column, line 11; fig. 1 to 3, 5<br>(Family: none) | 1,2<br>3-7 |
| A | JP 49-56008 A  (Westinghouse Electric Corp.),<br>30 May 1974 (30.05.1974),<br>page 1, lower right column, line 15 to page 2,<br>upper right column, line 7; fig. 1, 2<br>(Family: none) | 1-7 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>29 June, 2011 (29.06.11) | Date of mailing of the international search report<br>12 July, 2011 (12.07.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/061858

C (Continuation).    DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 013548/1975(Laid-open No. 096102/1976) (Mitsubishi Heavy Industries, Ltd.), 02 August 1976 (02.08.1976), page 4, line 7 to page 6, line 2; fig. 2, 3 (Family: none) | 1-7 |

Form PCT/ISA/210 (continuation of second sheet) (July 2009)

**EP 2 578 802 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010118350 A
- JP 2010118949 A
- JP 2000043252 A
- JP 2008532917 PCT
- WO 2004029329 PCT
- WO 2004033755 PCT

### Non-patent literature cited in the description

- **V. V. KRYLOV ; R.E.T.B. WINWARD.** Experimental investigation of the acoustic black hole effect for flexural waves in tapered plates. *Journal of Sound and Vibration,* 2007, vol. 300, 43-49